# EUROPÄISCHE PATENTSCHRIFT

(11) **EP 1 463 651 B1**
(45) Veröffentlichungstag und Bekanntmachung des Hinweises auf die Patenterteilung: **08.03.2006**
(21) Anmeldenummer: 03748009.2
(22) Anmeldetag: 11.09.2003
(51) Int. Cl.: B60Q 1/32, F21S 8/10

(54) **FAHRZEUGLEUCHTE MIT KREUZFÖRMIGER LICHTVERTEILUNG**
VEHICLE LIGHT HAVING A CRUCIFORM LIGHT DISTRIBUTION
FEUX DE VEHICULES A DIFFUSION EN CROIX DE LA LUMIERE

(30) Priorität: 11.09.2002 DE 20214039 U
(43) Veröffentlichungstag der Anmeldung: 06.10.2004
(73) Patentinhaber: FER Fahrzeugelektrik GmbH, 99819 Eisenach (DE)
(72) Erfinder: WIMBERT, Frank, 99817 Eisenach (DE); WERNER, Hermann, 99817 Eisenach (DE); WOLFF, Reingard, 99848 Wutha-Farnroda (DE)
(74) Vertreter: Strasser, Wolfgang
(86) Internationale Anmeldenummer: PCT/EP2003/010127
(87) Internationale Veröffentlichungsnummer: WO 2004/026627

(56) Entgegenhaltungen:
- DE-A- 10 036 323
- DE-A- 19 728 354
- US-A- 5 226 723

## Beschreibung

Die Erfindung betrifft eine Fahrzeugleuchte, insbesondere eine Seitenmarkierungsleuchte, gemäß dem Oberbegriff von Anspruch 1.

Die fotometrischen Anforderungen an Seitenmarkierungsleuchten von Kraftfahrzeugen sind in nationalen und internationalen Regelungen und Vorschriften festgelegt. Darin ist u.a. vorgegeben, aus welchen Winkelbereichen und mit welcher Lichtstärke das Lichtsignal für andere Verkehrsteilnehmer sichtbar sein muss.

Bei Seitenmarkierungsleuchten, wie sie beispielsweise an Nutzfahrzeugen wie Bussen und LKWs eingesetzt werden, sind die Mindestanforderungen an den Sichtbarkeitsbereich z.B. mit je 10° nach oben und unten, sowie je 45° nach links und rechts von einer Bezugsachse HV (in Strahlungsrichtung laufende Mittelachse) der Leuchte vorgeschrieben. Im gesamten Sichtbarkeitsbereich ist dabei eine einheitliche Mindestlichtstärke gefordert. Lediglich im Zentrum der Lichtverteilung muss die Lichtstärke deutlich höher sein.

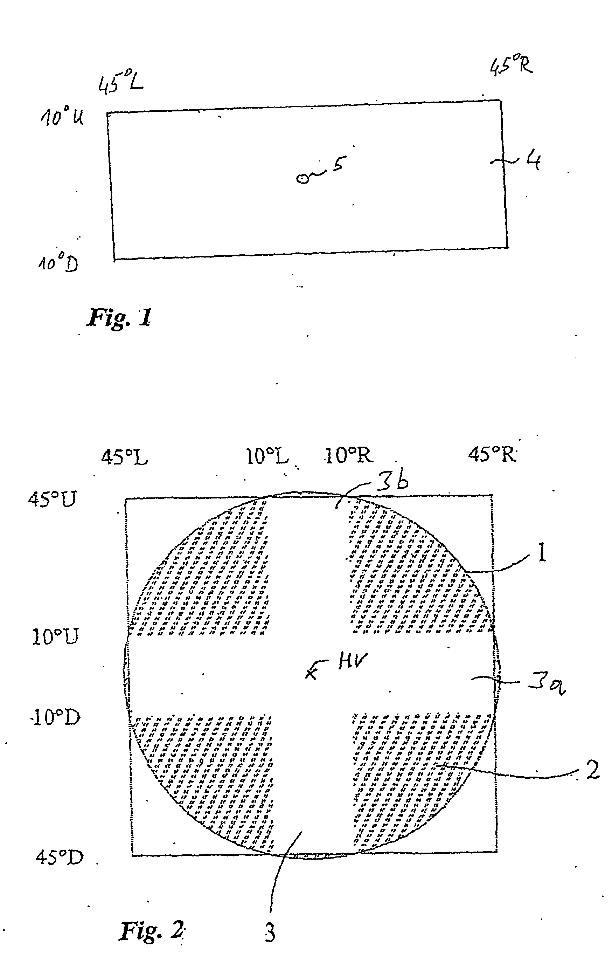

Fig. 1 zeigt die fotometrischen Mindestanforderungen für eine Seitenmarkierungsleuchte. Das abgebildete Fenster stellt den Mindest-Sichtbarkeitsbereich der Seitenmarkierungsleuchte dar, mit einem auf einen zentralen Mittelpunkt 5 bezogenen Strahlungswinkel von 10° nach oben und unten 10°U, 10°D, sowie von je 45° nach links und rechts 45°L, 45°R. Im Mittelpunkt 5 ist dabei eine wesentlich höhere Lichtstärke von z.B. 4cd (zentraler Peak) als im Bereich 4 (z.B. 0,6cd) vorgeschrieben.

Bei Verwendung von LEDs als Lichtquelle ist die Erfüllung dieser Forderung problematisch, da eine LED eine ungleichmäßige, etwa glockenförmige Strahlungscharakteristik aufweist, mit einer im Zentrum 5 sehr hohen Lichtstärke, die nach außen hin glockenförmig abfällt. Im Übergangsbereich zwischen dem Zentrum 5 und dem Außenbereich 4 ist die Lichtstärke aber meist wesentlich höher als sie gemäß der Mindestanforderungen sein müsste. Zur Einsparung von Lichtleistung werden daher Licht brechende Optiken verwendet, die einen weitgehend gleichmäßig hellen Lichtbalken erzeugen. Eine solche Leuchte ist jedoch nur in einer Anbauposition, z.B. waagerecht, positionierbar.

Bekannte Leuchten, die in unterschiedlichen Positionen (z.B. auch um 90° gedreht) anbringbar sind, umfassen eine Optik, die z.B. eine kreisförmige Projektion erzeugt, wie sie in Fig. 2 mit dem Bezugszeichen 1 dargestellt ist. Dadurch ist es zwar möglich die Leuchte in unterschiedlichen Positionen (gedreht) anzubringen, es wird aber eine hohe Lichtleistung benötigt um die jeweilige Projektionsfläche entsprechend auszuleuchten.

Dies ist im Falle einer LED relativ teuer, da zusätzliche Lichtleistung bei LEDs im Vergleich zu Glühlampen erhebliche Mehrkosten verursacht.

Aus der DE 100 36 323 A1 ist als nächster Stand der Technik eine Fahrzeugleuchte bekannt, bei der mindestens eine Lichtquelle hinter einer lichtdurchlässigen Lichtscheibe liegt und mindestens ein Lichtleiter zwischen der Lichtscheibe und der Lichtquelle angeordnet ist, wobei sich eines der Enden des Lichtleiters in unmittelbarer Nähe der Lichtquelle befindet. Dieser wenigstens eine Lichtleiter ist in Form einer Scheibe ausgebildet, die auf der Lichtscheibe senkrecht steht, mit dieser einstückig verbunden ist. In Richtung seiner größeren Ausdehnung ist der scheibenförmige Lichtleiter so ausgebildet, daß der in dieser Richtung abgestrahlte Teil des von der Lichtquelle abgegebenen Lichtbündels vollständig in ihn eingekoppelt wird. Die schmalen Stirnflächen des Lichtleiters sind so geformt, daß sie das in den Lichtleiter eingekoppelte, von innen her auf sie auftreffende Licht durch Totalreflexion zu einer dem Einkoppelende gegenüberliegenden balkenförmigen Austrittsfläche weiterleiten, die in der Lichtaustrittsfläche der Lichtscheibe liegt. Die beiden zueinander parallelen Hauptflächen des scheibenförmigen Lichtleiters sind jedoch als ebene Flächen ausgebildet, so daß nur ein geringer Teil des von innen her auf sie auftreffenden Lichts eine Totalreflexion erfährt und zur balkenförmigen Austrittsfläche gelangt, während der Rest durch diese Hauptflächen hindurch zur Seite hin austritt und somit für eine Ausleuchtung der balkenförmigen Austrittsfläche nicht zur Verfügung steht. Zur Ausleuchtung einer kreuzförmigen Austrittsfläche können auch zwei einander senkrecht durchdringende, scheibenförmige Lichtleiter vorgesehen sein. Neben der unvollständigen Lichtausbeute ist an dieser bekannten Anordnung nachteilig, daß der oder die scheibenförmigen Lichtleiter eine gewisse axiale Länge aufweisen müssen, wodurch sich die Einbautiefe einer derartigen Fahrzeugleuchte erhöht. Außerdem ist die Herstellung einer Lichtscheibe mit einem oder mehreren sich senkrecht zu ihren Hauptflächen erstreckenden, scheibenförmigen Lichtleitern auch dann vergleichsweise aufwendig, wenn alle diese Teile in einem Spritzgießverfahren so hergestellt werden, daß sie miteinander einstückig verbunden sind.

Aufgabe der vorliegenden Erfindung ist, eine Fahrzeugleuchte zu schaffen, die in jeweils um 90° gegeneinander verdrehten Positionen montierbar und kostengünstig herstellbar ist, eine geringe Einbautiefe aufweist und dabei die fotometrischen Mindestanforderungen erfüllt.

Der wesentliche Gedanke der Erfindung besteht darin, eine Fahrzeugleuchte, insbesondere eine Seitenmarkierungsleuchte, mit einer in einem plattenförmigen Körper ausgebildeten Optik zu versehen, die eine kreuzförmige Lichtverteilung erzeugt. Dadurch wird gegenüber einer kreisförmigen Abstrahlung eine wesentlich geringere Projektionsfläche (nämlich nur eine kreuzförmige Projektionsfläche) bestrahlt, wofür wesentlich weniger Lichtleistung erforderlich ist. Somit können schwächere und damit günstigere Lichtquellen verwendet werden, deren abgestrahltes Licht wesentlich effizienter eingesetzt wird, als beim Stand der Technik.

Darüber hinaus ist es möglich, die Leuchte in mehreren Positionen, vorzugsweise in vier Positionen, jeweils um 90° gedreht, anzubringen. Im Falle einer Seitenmarkierungsleuchte kann diese z.B. sowohl waagerecht als auch senkrecht (um 90° gedreht) an einer vertikalen Seitenwand eines Fahrzeugs angebaut werden.

Gemäß einer bevorzugten Ausführungsform der Erfindung umfasst die Leuchte 2n LEDs, wobei n eine ganze Zahl ≥ 1 ist. Bei dieser Art von Lichtquellen ergeben sich durch die Einsparung von Lichtleistung erhebliche Kostenvorteile.

Eine Möglichkeit zur Realisierung der kreuzförmigen Lichtverteilung besteht in der Anwendung einer Optik mit kreuzförmiger Gestalt.

Die erfindungsgemäße Optik hat vorzugsweise eine zentrale Sammellinse. Hierdurch kann die Lichtintensität im Zentrum der Lichtverteilung zusätzlich verstärkt werden.

Die Optik ist vorzugsweise in oder auf einer Lichtaustrittsfläche, z.B. einer aus transparentem Kunststoff gebildeten Fläche, angeordnet.

Eine besonders bevorzugte Fahrzeugleuchte umfaßt zwei kreuzförmige Optiken, von denen jede das auf sie von der Lichtquelle auftreffende Licht stärker in den einen Kreuzbalken der von ihr erzeugten kreuzförmigen Lichtverteilung lenkt als in den anderen. Diese beiden Optiken sind gemäß der Erfindung so nebeneinander positioniert, daß sich die beiden von ihnen abgegebenen, jeweils einen kreuzförmigen Querschnitt besitzenden "Lichtbündel" nach Durchlaufen eines sehr kleinen Nahbereichs so vereinigen, daß in mittlerer und größerer Distanz auf einer zu HV senkrechten Projektionsfläche einen einzigen kreuzförmigen Lichtfleck erzeugen. Dadurch, daß die beiden Optiken gemäß der Erfindung gegeneinander um 90° verdreht angeordnet sind, gleicht sich die oben beschriebene Asymmetrie der Lichtverteilung auf die beiden Kreuzbalken der einzelnen "Lichtbündel" im vereinigten Gesamtlichtbündel vollständig aus, und die Fahrzeugleuchte kann in 90°-Schritten gedreht werden, ohne daß sich im Mittel- oder Fembereich an der Intensitätsverteilung des erzeugten Gesamtlichtbündels etwas ändert.

Diese und weitere vorteilhafte Ausgestaltungen und Weiterbildungen einer erfindungsgemäßen Fahrzeugleuchte sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: eine Ansicht einer Lichtverteilung für eine Seitenmarkierungsleuchte gemäß fotometrischer Mindestanforderungen;
- Fig. 2: eine Ansicht einer Lichtverteilung bei Verwendung einer Optik gemäß der Erfindung;
- Fig. 3: eine Draufsicht auf die der Lichtquelle zugewandte Rückseite einer erfindungsgemäßen Optik zur Erzeugung einer asymmetrischen, kreuzförmigen Lichtverteilung;
- Fig. 4: einen Schnitt durch die Optik aus Fig. 3 längs der Linie IV-IV;
- Fig. 5: einen Schnitt durch die Optik aus Fig. 3 längs der Linie V-V;
- Fig. 6: einen Schnitt durch die Optik aus Fig. 3 längs der Linie VI-VI;
- Fig. 7: einen Schnitt durch die Optik aus Fig. 3 längs der Linie VII-VII;
- Fig. 8: eine der Fig. 3 ähnliche Draufsicht auf die zwei Lichtquellen zugewandte Rückseite von zwei nebeneinander angeordneten Optiken, die gemeinsam eine symmetrische kreuzförmige Lichtverteilung erzeugen, und
- Fig. 9: eine perspektivische Darstellung einer Lichtscheibe einer Fahrzeugleuchte mit einer integrierten Optik gemäß Fig. 8.

Bezüglich der Erläuterung von Fig. 1 wird auf die Beschreibungseinleitung verwiesen.

Fig. 2 zeigt die kreisförmige Projektion 1 eines Lichtkegels, wie er von herkömmlichen Fahrzeugleuchten, die sowohl senkrecht als auch waagerecht (d.h. um 90° verdreht) an einer Fahrzeugwand anbaubar sind, ausgestrahlt wird. Wegen der relativ großen bestrahlten Fläche ist auch die erforderliche Lichtleistung der verwendeten Lichtquelle relativ hoch.

Eine Leuchte gemäß der Erfindung umfasst daher eine Optik, die eine kreuzförmige Lichtverteilung 3 mit zwei aufeinander senkrecht stehenden Lichtbalken 3a und 3b erzeugt. Da in diesen Balken 3a und 3b die Lichtverteilung völlig symmetrisch ist, kann eine erfindungsgemäße Leuchte auch um 90° verdreht eingebaut werden, ohne daß sich die Lichtverteilung des in den Raum projizierten Lichtkegels merklich ändert. Da die Fläche der Lichtbalken 3a, 3b in jeder Entfernung von der Lichtquelle wesentlich kleiner ist als die des zugehörigen, kreisförmigen Kegelschnitts 1 genügt eine wesentlich geringere Lichtleistung um die gleiche, vorgeschriebene Helligkeit zu erzielen.

Der Lichtbalken 3a hat, wie in den fotometrischen Vorschriften für Seitenbegrenzungsleuchten vorgegeben, bezüglich der zentralen Lichtkegelachse HV eine Ausdehnung von 10° nach oben und nach unten sowie von je 45° nach links und nach rechts.

Demgegenüber besitzt der vertikale Lichtbalken 3b eine horizontale Ausdehnung von 10° nach links und rechts und eine vertikale Ausdehnung von jeweils 45° nach oben bzw. unten, so daß er bei einer Drehung der erfindungsgemäßen Leuchte um 90° die Funktion des horizontalen Lichtbalkens ohne weiteres übernehmen kann.

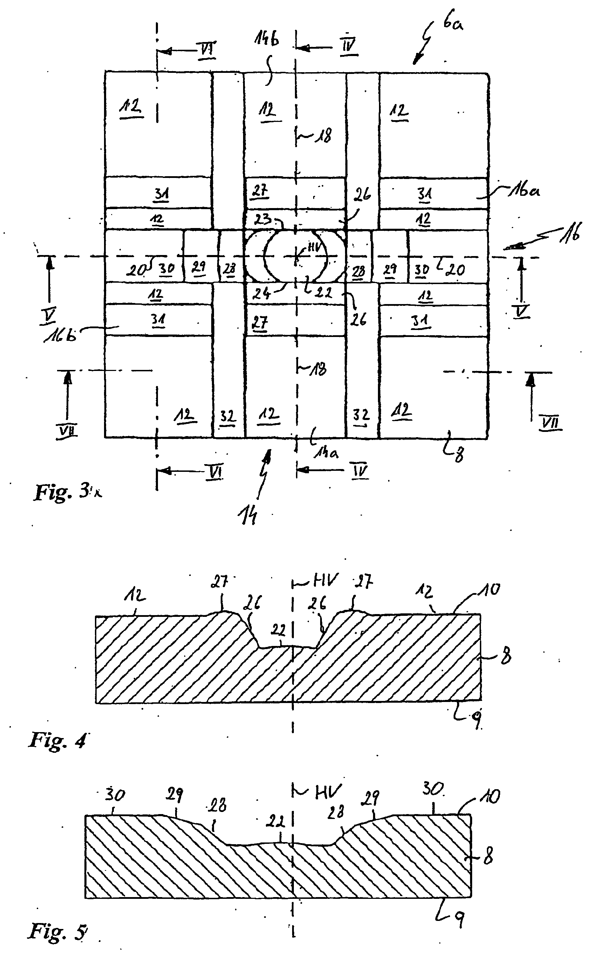

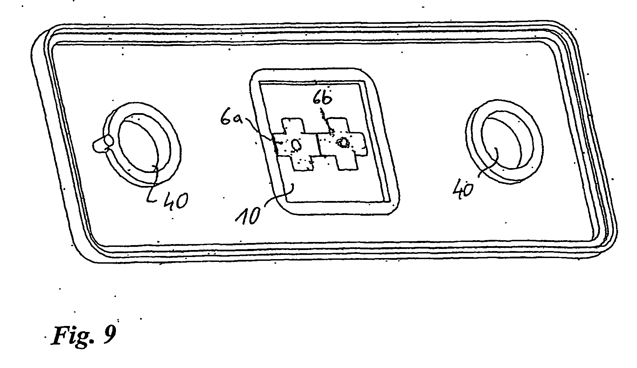

In Fig. 3 ist eine Optik 6a für eine erfindungsgemäße Leuchte dargestellt, die in Kombination mit einer gleichen, neben ihr um 90° verdreht angeordneten Optik 6b (siehe Fig. 8) in der Lage ist, die in Fig. 2 gezeigte, horizontal und vertikal völlig symmetrische Lichtverteilung zu erzeugen.

Jede der Optiken 6a, 6b ist in einem plattenförmigen Körper 8 aus einem lichtdurchlässigen Material ausgebildet, und besitzt in der Draufsicht der Fig. 3 bzw. 8 eine in etwa quadratische Form.

In Blickrichtung dieser beiden Figuren ist vor dem plattenförmigen Körper 8 für jede der beiden Optiken 6a, 6b eine (nicht dargestellte) Lichtquelle, vorzugsweise eine Leuchtdiode vorgesehen, die ein kegelförmiges Lichtbündel auf die dem Betrachter zugewandte Rückseite 10 des Körpers 8 so strahlt, daß die zentrale Symmetrieachse HV dieses Lichtbündels in etwa senkrecht auf diese Rückseite 10 fällt und den Körper 8 in der Mitte des von der jeweiligen Optik 6a bzw. 6b gebildeten Quadrates ohne Richtungsänderung durchstößt.

Wie man insbesondere den Schnittfiguren 4 bis 7 entnimmt, besitzt der Körper 8 im Wesentlichen die Form einer ebenen Platte mit planparallelen Vorder- und Rückseiten 9 bzw. 10, wobei jedoch in die Rückseiten 10 eine Reihe von optisch wirksamen Strukturen eingearbeitet ist, die im Folgenden noch genauer erläutert werden.

Im vorliegenden Zusammenhang wird unter einer optisch wirksamen Struktur jede linsen- oder prismenartige Struktur verstanden, die in der Lage ist, die Richtung von durch sie hindurchtretenden Lichtstrahlen um einen vorgegebenen Winkel zu ändern.

Neben diesen optisch wirksamen Strukturen weist jede der Optiken 6a, 6b eine Vielzahl von optisch inaktiven Bereichen 12 auf, durch die das auftreffende Licht ohne Richtungsänderung hindurchtritt.

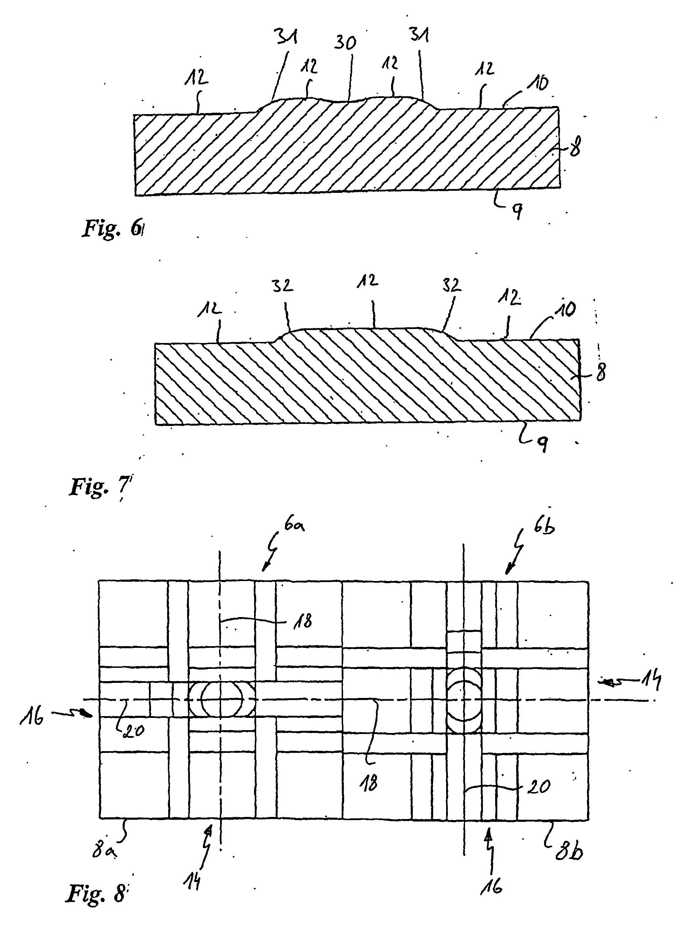

Wie man insbesondere den Fig. 6 und 7 entnimmt, müssen dabei die verschiedenen Bereiche 12 nicht notwendigerweise die gleiche Dicke besitzen. Gemeinsam ist ihnen lediglich die optische Inaktivität in dem eben definierten Sinn.

Wie die Fig. 3 und 8 zeigen, sind die optisch wirksamen Strukturen einer jeden Optik 6a bzw. 6b längs zweier Kreuzbalken 14, 16 angeordnet, deren zentrale Achsen 18, 20 sich im Zentrum des jeweiligen Quadrates, d.h. also im Durchstoßpunkt der Zentralachse HV des auffallenden Lichtkegels kreuzen.

Zwar sind die beiden Arme 14a, 14b bzw. 16a, 16b eines jeden Kreuzbalkens 14 bzw. 16 bezüglich des eben erwähnten Zentrums symmetrisch ausgebildet, doch unterscheiden sich die beiden Kreuzbalken 14, 16 hinsichtlich der sie bildenden optisch wirksamen Einzelstrukturen von einander.

Konzentrisch zum Schnittpunkt der beiden zentralen Achsen 18, 20 ist eine Sammellinse 22 vorgesehen, welche das auf sie auftreffende Licht so bündelt, daß es in HV-Richtung den erforderlichen Helligkeits-Peak erzeugt.

Da das von der Lichtquelle her auftreffende Licht eine von innen nach außen in etwa glockenförmig abfallende Helligkeit aufweist, sorgen die sich an die zentrale Sammellinse 22 in den Kreuzbalken 14, 16 anschließenden, optisch wirksamen Einzelelemente für eine Umverteilung des auftreffenden Lichts aus Bereichen mit Lichtüberschuß im Zentrum der Anordnung und seiner unmittelbaren Umgebung in die weiter außen liegenden Winkelbereiche mit Lichtmangel.

Allerdings geschieht dies in den beiden Kreuzbalken 14, 16 in unterschiedlicher Weise.

Wie man dem Schnitt der Fig. 4 entnimmt, besitzt die zentrale Linse 22 in Richtung des Kreuzbalkens 14 nur eine relativ kleine Ausdehnung, so daß sie in der Draufsicht der Fig. 3 als auf zwei Seiten beschnittener Kreis erscheint, wobei die beiden Sekanten 23, 24 parallel zur zentralen Achse 20 des horizontalen Kreuzbalkens 16 verlaufen. In Richtung des vertikalen Kreuzbalkens 14 schließt sich an die zentrale Sammellinse 22 auf jeder Seite und zum Durchstoßpunkt der Zentralachse HV symmetrisch eine im Schnitt der Fig. 4 als steil ansteigende prismatische Flanke wiedergegebene, optisch wirksame Struktur 26 an, die das auf sie auftreffende Licht nach außen verteilt, während die sich an sie unmittelbar anschließenden, kuppel- oder linsenförmigen, optisch wirksamen Bereiche 27 das sie treffende Licht aufweiten und es über den gesamten Bereich des betreffenden Kreuzbalken-Arms 14a bzw. 14b verteilen.

An die optisch wirksamen Bereiche 27 schließt sich dann nach außen hin jeweils ein optisch nicht wirksamer Bereich 12 an.

Wie der Schnitt der Fig. 5 zeigt, besitzt die zentrale Linse 22 in Richtung der zentralen Achse 20 des Kreuzbalkens 16 eine wesentlich größere Ausdehnung, so daß sie hier die volle Kreisform erreicht. An die Linse 22 schließen sich dann auf beiden Seiten zum Durchstoßpunkt der Zentralachse HV symmetrisch zwei optisch wirksame Elemente 28, 29 an, die beide im Schnitt der Fig. 5 als ansteigende prismatische Flanken dargestellt sind, wobei die Flanke des optisch wirksamen Elements 28 steiler verläuft als die des optisch wirksamen Elements 29. Beide verteilen ähnlich, wie die optisch wirksamen Elemente 26 das auf sie auftreffende Licht nur nach außen. An die optisch wirksamen Elemente 29 schließt sich auf beiden Seiten ein optisch wirksames Element 30 an, dessen Bedeutung weiter unten erläutert wird.

Weiterhin umfaßt der horizontale Kreuzbalken 16 optisch wirksame Elemente 31, die, wie man der Fig. 6 entnimmt, als Zylindersegmente ausgebildet sind, wobei sich die Längsachsen dieser Zylinder parallel zur zentralen Achse 20 des horizontalen Kreuzbalkens 16 erstrecken. Mit Hilfe dieser optisch wirksamen Elemente 31 wird Licht aus Bereichen außerhalb der geforderten Zonen so gebrochen, daß es in die Bereiche fällt, in denen eine Erhöhung der Lichtintensität erforderlich ist.

Auch der vertikale Kreuzbalken 14 umfaßt in Form von Zylindersegmenten ausgebildete optisch wirksame Bereiche 32 (siehe Fig. 7), welche die gleiche Funktion wie die optisch wirksamen Elemente 31 besitzen.

Aufgrund der Tatsache, daß die Lichtquelle einen bestimmten Mindestabstand von ihrer zugehörigen Optik 6a (d.h. in Fig. 3 vor der Zeichenebene) bzw. 6b aufweisen muß, weil sonst bei ungenauer Positionierung die entstehenden Winkelfehler zu groß werden, sind, wie oben bereits angedeutet, die Kreuzbalken 14, 16 nicht gleich ausgebildet. Geometrisch haben die zwischen den sich in Balkenlängsrichtung erstreckenden, optisch wirksamen Elementen 32 des vertikalen Kreuzbalkens 14 liegenden, optisch wirksamen Elemente 26 und 27 ebenso wie seine optisch nicht wirksamen Bereiche 12 die richtige Breite, um das Licht im geforderten Winkelbereich hindurchtreten zu lassen bzw. im vertikalen Kreuzbalken 14 zu verteilen.

Aus geometrischen Gründen reicht der verbleibende Platz für den horizontalen Kreuzbalken 16 nicht aus, um ihn mit der gleichen Breite auszuführen, so daß seine optisch wirksamen Bereiche 28, 29, 30 senkrecht zur zentralen Achse 20 schmaler ausgebildet werden müssen. Um dies zumindest teilweise kompensieren zu können, ist, wie Fig. 6 zeigt, in den zwischen den optisch aktiven Bereichen 31, 31 liegendem, optisch nicht aktiven Bereich 12 der oben bereits im Zusammenhang mit Fig. 5 erwähnte, konkave, optisch aktive Bereich 30 ausgebildet, der, wie Fig. 7 zeigt, im vertikalen Kreuzbalken 14 nicht vorhanden ist.

Die durch diesen konkaven Bereich 30 erzeugte Linsenwirkung führt dazu, daß der Randbereich der kreuzförmigen Lichtverteilung besser mit Licht versorgt wird.

Da durch die optisch aktiven Bereiche 30 die asymmetrische Lichtverteilung hinter einer jeden der Optiken 6a und 6b nicht vollständig ausgeglichen werden kann, werden erfindungsgemäß für eine Fahrzeugleuchte, die in 90°-Schritten verdreht montierbar ist, wie in Figur 8 gezeigt, zwei Optiken 6a, 6b so unmittelbar nebeneinander und gegeneinander um 90° verdreht angeordnet, daß die zentrale Achse 20 des Kreuzbalkens 16 der in der in Figur 8 linken Optik 6a mit der zentralen Achse 18 des horizontalen Kreuzbalkens 14 der rechten Optik 6b fluchtet, während die zentrale Achse 18 des Kreuzbalkens 14 der linken Optik 6a zur zentralen Achse 20 des Kreuzbalkens 16 der rechten Optik 6b parallel verläuft.

Ansonsten sind die beiden Optiken 6a und 6b in identischer Weise so ausgebildet, wie dies unter Bezugnahme auf die Figuren 3 bis 7 beschrieben wurde.

Die aus einem lichtdurchlässigen Material bestehenden Körper 8a, 8b, in deren Rückseite die jeweilige Optik 6a bzw. 6b eingearbeitet ist, sind vorzugsweise einstückig miteinander verbunden und bilden beispielsweise einen Teil der Lichtdurchtrittsscheibe 10 der in Figur 9 dargestellten Fahrzeugleuchte.

Durch die Anordnung der beiden Optiken 6a, 6b in einer gemeinsamen Ebene und die oben beschriebene Ausgestaltung ihrer optisch wirksamen Elemente kann erreicht werden, daß das durch sie hindurchtretende Licht nach Durchlaufen eines nur wenige Zentimeter betragenden Nahbereiches sich zu einem einzigen Gesamtlichtbündel vereinigt, das in mittleren und größeren Entfernungen einen kreuzförmigen Querschnitt besitzt, wobei die beiden Kreuzbalken identische Lichtverteilungen aufweisen. Die Verwendung von zwei derartig nebeneinander angeordneten Optiken mit jeweils einer dazugehörigen Leuchtdiode hat gegenüber einer völlig symmetrischen Ausbildung einer einzigen Optik mit nur einer Leuchtdiode den Vorteil, daß die beiden Leuchtdioden eine wesentlich geringere Helligkeit aufweisen müssen und dadurch kostengünstiger sind als eine einzige Leuchtdiode, die eine für die Ausleuchtung einer völlig symmetrisch ausgebildeten kreuzförmigen Optik ausreichende Helligkeit besitzen würde.

Figur 9 zeigt eine erfindungsgemäße Fahrzeugleuchte nochmals in perspektivischer Ansicht, wobei zusätzlich zu den bisher beschriebenen Elementen noch zwei Befestigungsöffnungen 40 wiedergegeben sind.

## Patentansprüche

1. Fahrzeugleuchte, insbesondere Seitenmarkierungsleuchte für ein Kraftfahrzeug, mit wenigstens einer Lichtquelle und wenigstens einer im Strahlengang der Lichtquelle angeordneten Optik (6a, 6b), auf die das von der Lichtquelle ausgehende, im wesentlichen kegelförmige Lichtbündel unmittelbar auftrifft und diese durchstrahlt, wobei die Optik (6a, 6b) in einem plattenförmigen Körper (8) aus einem lichtdurchlässigen Material so ausgebildet ist, daß sie aus dem auf sie auftreffenden Lichtbündel eine kreuzförmige Lichtverteilung (3) erzeugt.

2. Fahrzeugleuchte nach Anspruch 1, **dadurch gekennzeichnet, daß** die wenigstens eine Lichtquelle eine Leuchtdiode ist.

3. Fahrzeugleuchte nach Anspruch 1 oder 2, **dadurch gekennzeichnet, daß** die Optik (6a, 6b) zwei langgestreckte, einander überschneidende Kreuzbalken (14, 16) aufweist, und daß die Lichtquelle so angeordnet ist, daß der Zentralstrahl (HV) des von ihr ausgehenden Lichtkegels auf der von den zentralen Längsachsen (18, 20) der beiden Kreuzbalken (14, 16) aufgespannten Ebene im wesentlichen senkrecht steht und diese im Schnittpunkt der beiden Längsachsen (18, 20) durchstößt.

4. Fahrzeugleuchte nach Anspruch 3, **dadurch gekennzeichnet, daß** jeder Kreuzbalken (14, 16) mehrere optisch unterschiedlich wirkende Einzelstrukturen (26, 27, 28, 29, 30, 31, 32) umfaßt.

5. Fahrzeugleuchte nach Anspruch 4, **dadurch gekennzeichnet, daß** zumindest einige der optisch unterschiedlich wirkenden Einzelstrukturen (26, 27, 28, 29, 30, 31, 32) in Längsrichtung des Kreuzbalkens (14, 16) hintereinander angeordnet sind.

6. Fahrzeugleuchte nach Anspruch 4 oder 5, **dadurch gekennzeichnet, daß** zumindest einige der optisch unterschiedlich wirkenden Einzelstrukturen (26, 27, 28, 29, 30, 31, 32) in Querrichtung des Kreuzbalkens (14, 16) nebeneinander angeordnet sind.

7. Fahrzeugleuchte nach einem der Ansprüche 4 bis 6, **dadurch gekennzeichnet, daß** jeder der Kreuzbalken (14, 16) zwei Arme (14a, 14b, 16a, 16b) besitzt, deren optisch wirksame Einzelstrukturen (26, 27, 28, 29, 30, 31, 32) bezüglich des Schnittpunktes der Längsachsen (18,20) der Kreuzbalken (14, 16) symmetrisch ausgebildet und angeordnet sind.

8. Fahrzeugleuchte nach einem der Ansprüche 3 bis 7, **dadurch gekennzeichnet, daß** die beiden Kreuzbalken (14, 16) eine unterschiedliche Breite besitzen.

9. Fahrzeugleuchte nach einem der Ansprüche 4 bis 8, **dadurch gekennzeichnet, daß** die optisch wirksamen Einzelstrukturen (26, 27, 28, 29, 30, 31, 32) des einen Kreuzbalkens (14) von denen des anderen Kreuzbalkens (16) zumindest teilweise verschieden sind.

10. Fahrzeugleuchte nach einem der Ansprüche 4 bis 9, **dadurch gekennzeichnet, daß** wenigstens einer der Kreuzbalken (14, 16) zusätzlich zu den optisch wirksamen Einzelstrukturen (26, 27, 28, 29, 30, 31, 32) lichtdurchlässige aber optisch nicht wirksame Bereiche (12) umfaßt.

11. Fahrzeugleuchte nach einem der Ansprüche 3 bis 10, **dadurch gekennzeichnet, daß** die beiden Kreuzbalken (14, 16) von lichtdurchlässigen, optisch nicht wirksamen Bereichen (12) zumindest teilweise umgeben sind.

12. Fahrzeugleuchte nach einem der Ansprüche 3 bis 11, **dadurch gekennzeichnet, daß** die beiden Kreuzbalken (14, 16) aufeinander senkrecht stehen.

13. Fahrzeugleuchte nach einem der Ansprüche 3 bis 12, **dadurch gekennzeichnet, daß** eine zum Schnittpunkt der beiden Längsachsen (18, 20) der Kreuzbalken (14, 16) konzentrische Sammellinse (22) vorgesehen ist.

14. Fahrzeugleuchte nach Anspruch 13, **dadurch gekennzeichnet, daß** die Sammellinse (22) **dadurch** von der Kreisform abweicht, daß sie auf zwei Seiten durch zur Längsachse (20) eines Kreuzbalkens (16) parallele Sekanten (23, 24) beschnitten ist.

15. Fahrzeugleuchte nach einem der Ansprüche 12 bis 14, **dadurch gekennzeichnet, daß** sie zwei Lichtquellen mit jeweils einer zugehörigen Optik (6a, 6b) umfaßt, wobei die beiden Optiken (6a, 6b) in einer Ebene liegend so nebeneinander angeordnet sind, daß die Längsachsen (18, 20) von zwei Kreuzbalken (14, 16) miteinander fluchten und die Längsachsen (18, 20) der beiden anderen Kreuzbalken (14, 16) zu einander parallel verlaufen.

16. Fahrzeugleuchte nach Anspruch 15, **dadurch gekennzeichnet, daß** die optisch wirksamen Einzelstrukturen (26, 27, 28, 29, 30, 31, 32) in wenigstens einem Kreuzbalken (14, 16) der einen Optik (6a) von denen in dem jeweils gleich verlaufenden Kreuzbalken (14, 16) der anderen Optik (6a) verschieden sind.

17. Fahrzeugleuchte nach Anspruch 16, **dadurch gekennzeichnet, daß** die beiden Kreuzbalken (14, 16) einer jeden der beiden Optiken (6a, 6b) unterschiedliche optisch wirksame Einzelstrukturen (26, 27, 28, 29, 30, 31, 32) besitzen und daß die beiden Optiken (6a, 6b) zwar gleich ausgebildet aber gegeneinander um 90° verdreht angeordnet sind.

## Claims

1. A vehicle lamp, in particular a side marking lamp for a motor vehicle, comprising at least one light source and at least one optical system (6a, 6b) arranged in the beam path of the light source, the substantially conical light beam issuing from the light source impinging directly on the optical system (6a, 6b) and shines therethrough, wherein the optical system (6a, 6b) is formed in a plate-shaped body 8 of transparent material such that it produces a cruciform light distribution (3) from light beam impinging thereon.

2. A vehicle lamp as set forth in claim 1 **characterised in that** the at least one light source is a light emitting diode.

3. A vehicle lamp as set forth in claim 1 or claim 2 **characterised in that** the optical system (6a, 6b) has two elongate, mutually intersecting crossbars (14, 16) and that the light source is so arranged that the central beam (HV) of the light cone issuing therefrom is in substantially perpendicular relationship with the plane defined by the central longitudinal axes (18, 20) of the two crossbars (14, 16) and passes therethrough at the point of intersection of the two longitudinal axes (18, 20).

4. A vehicle lamp as set forth in claim 3 **characterised in that** each crossbar (14, 16) includes a plurality of optically differently active individual structures (26, 27, 28, 29, 30, 31, 32).

5. A vehicle lamp as set forth in claim 4 **characterised in that** at least some of the optically differently active individual structures (26, 27, 28, 29, 30, 31, 32) are arranged one behind the other in the longitudinal direction of the crossbar (14, 16).

6. A vehicle lamp as set forth in claim 4 or claim 5 **characterised in that** at least some of the optically differently active individual structures (26, 27, 28, 29, 30, 31, 32) are arranged one beside the other in the transverse direction of the crossbar (14, 16).

7. A vehicle lamp as set forth in one of claims 4 through 6 **characterised in that** each of the crossbars (14, 16) has two arms (14a, 14b, 16a, 16b) whose optically active individual structures (26, 27, 28, 29, 30, 31, 32) are of a symmetrical configuration and arrangement with respect to the point of intersection of the longitudinal axes (18, 20) of the crossbars (14, 16).

8. A vehicle lamp as set forth in one of claims 3 through 7 **characterised in that** the two crossbars (14, 16) are of differing widths.

9. A vehicle lamp as set forth in one of claims 4 through 8 **characterised in that** the optically active individual structures (26, 27, 28, 29, 30, 31, 32) of the one crossbar (14) are at least partially different from those of the other crossbar (16).

10. A vehicle lamp as set forth in one of claims 4 through 9 **characterised in that** at least one of the crossbars (14, 16) includes transparent but optically inactive regions (12) in addition to the optically active individual structures (26, 27, 28, 29, 30, 31, 32).

11. A vehicle lamp as set forth in one of claims 3 through 10 **characterised in that** the two crossbars (14, 16) are at least partially surrounded by transparent optically inactive regions (12).

12. A vehicle lamp as set forth in one of claims 3 through 11 **characterised in that** the two crossbars (14, 16) are in mutually perpendicular relationship.

13. A vehicle lamp as set forth in one of claims 3 through 12 **characterised in that** there is provided a converging lens (22) which is concentric with the point of intersection of the two longitudinal axes (18, 20) of the crossbars (14, 16).

14. A vehicle lamp as set forth in claim 13 **characterised in that** the converging lens (22) differs from a circular shape insofar as it is cut off on two sides by secants (23, 24) in parallel relationship with the longitudinal axis (20) of one crossbar (16).

15. A vehicle lamp as set forth in one of claims 12 through 14 **characterised in that** it includes two light sources each with a respective associated optical system (6a, 6b), wherein the two optical systems (6a, 6b) are arranged in a plane in mutually juxtaposed relationship in such a way that the longitudinal axes (18, 20) of two crossbars (14, 16) are aligned with each other and the longitudinal axes (18, 20) of the other two crossbars (14, 16) extend in mutually parallel relationship.

16. A vehicle lamp as set forth in claim 15 **characterised in that** the optically active individual structures (26, 27, 28, 29, 30, 31, 32) in at least one crossbar (14, 16) of the one optical system (6a) are different from those in the respective identically extending crossbar (14, 16) of the other optical system (6a).

17. A vehicle lamp as set forth in claim 16 **characterised in that** the two crossbars (14, 16) of each of the two optical systems (6a, 6b) have different optically active individual structures (26, 27, 28, 29, 30, 31, 32) and that the two optical systems (6a, 6b) although of an identical configuration are however arranged turned through 90° relative to each other.

## Revendications

1. Feu de véhicule, notamment feu de marquage latéral pour un véhicule automobile, avec au moins une source lumineuse et avec au moins une optique (6a, 6b) disposée dans la trajectoire du faisceau de la source lumineuse, sur laquelle le faisceau lumineux sensiblement conique de la source lumineuse est directement incident et qu'il traverse, l'optique (6a, 6b) étant conçue dans un corps en forme de plaque (8) en un matériau transparent, de façon à diffuser une lumière cruciforme (3).

2. Feu de véhicule selon la revendication 1, **caractérisé en ce qu'**au moins la source lumineuse est une diode lumineuse.

3. Feu de véhicule selon l'une quelconque des revendications 1 ou 2, **caractérisé en ce que** l'optique (6a, 6b) comporte deux barres croisées allongées qui se recoupent (14, 16) et **en ce que** la source lumineuse est disposée de façon à ce que le faisceau central (HV) du cône lumineux qu'elle envoie arrive sensiblement à la perpendiculaire sur le plan formé par les axes longitudinaux centraux (18, 20) des deux barres croisées (14, 16) et le traverse à l'intersection des deux axes longitudinaux (18, 20).

4. Feu de véhicule selon la revendication 3, **caractérisé en ce que** chaque barre croisée (14, 16) comprend plusieurs structures individuelles provoquant un effet optique différent (26, 27, 28, 29, 30, 31, 32).

5. Feu de véhicule selon la revendication 4, **caractérisé en ce qu'**au moins certaines des structures individuelles provoquant un effet optique différent (26, 27, 28, 29, 30, 31, 32) sont disposées l'une derrière l'autre en direction longitudinale de la barre croisée (14,16).

6. Feu de véhicule selon la revendication 4 ou 5, **caractérisé en ce qu'**au moins certaines des structures individuelles provoquant un effet optique différent (26, 27, 28, 29, 30, 31, 32) sont disposées côte à côte dans le sens transversal de la barre croisée (14,16).

7. Feu de véhicule selon l'une quelconque des revendications 4 à 6, **caractérisé en ce que** chacune des barres croisées (14, 16) comporte deux bras (14a, 14b, 16a, 16b), dont les structures individuelles provoquant un effet optique (26, 27, 28, 29, 30, 31, 32) sont conçues et disposées de façon symétrique par rapport au point d'intersection des axes longitudinaux (18, 20) des barres croisées (14, 16).

8. Feu de véhicule selon l'une quelconque des revendications 3 à 7, **caractérisé en ce que** les deux barres croisées (14, 16) ont une largeur différente.

9. Feu de véhicule selon l'une quelconque des revendications 4 à 8, **caractérisé en ce que** les structures individuelles provoquant un effet optique (26, 27, 28, 29, 30, 31, 32) de l'une des barres croisées (14) sont au moins partiellement dissemblables de celles de l'autre barre croisée (16).

10. Feu de véhicule selon l'une quelconque des revendications 4 à 9, **caractérisé en ce qu'**en supplément des structures individuelles provoquant un effet optique (26, 27, 28, 29, 30, 31, 32), au moins l'une des barres croisées (14, 16) comprend des zones transparentes (12), mais ne provoquant aucun effet optique.

11. Feu de véhicule selon l'une quelconque des revendications 3 à 10, **caractérisé en ce que** les deux barres croisées (14, 16) sont entourées au moins partiellement de zones transparentes (12), mais ne provoquant aucun effet optique.

12. Feu de véhicule selon l'une quelconque des revendications 3 à 11, **caractérisé en ce que** les deux barres croisées (14, 16) sont posées à la perpendiculaire l'une sur l'autre.

13. Feu de véhicule selon l'une quelconque des revendications 3 à 12, **caractérisé en ce qu'**on a prévu une lentille convergente (22) concentrique par rapport au point d'intersection des deux axes longitudinaux (18, 20) des barres croisées (14, 16).

14. Feu de véhicule selon la revendication 13, **caractérisé en ce que** la lentille convergente (22) diffère de la forme circulaire **en ce qu'**elle est recoupée sur deux côtés par une sécante (23, 24) qui est parallèle à l'axe longitudinal (20) d'une barre croisée (16).

15. Feu de véhicule selon l'une quelconque des revendications 12 à 14, **caractérisé en ce qu'**il comprend deux sources lumineuses avec respectivement une optique correspondante (6a, 6b), les deux optiques (6a, 6b) étant disposées côte à côte dans un plan, de façon à ce que les axes longitudinaux (18, 20) de deux barres croisées (14, 16) soient alignés l'un sur l'autre et les axes longitudinaux (18, 20) des deux autres barres croisées (14, 16) soit parallèles l'un par rapport à l'autre.

16. Feu de véhicule selon la revendication 15, **caractérisé en ce que** dans au moins une barre croisée (14, 16) de l'une des optiques (6a), les structures individuelles provoquant un effet optique (26, 27, 28, 29, 30, 31, 32) sont dissemblables de celles de la barre croisée (14, 16) de l'autre optique (6a) qui s'étend respectivement dans la même direction.

17. Feu de véhicule selon la revendication 16, **caractérisé en ce que** les deux barres croisées (14, 16) de chacune des deux optiques (6a, 6b) comportent des structures individuelles provoquant un effet optique (26, 27, 28, 29, 30, 31, 32) qui sont dissemblables et **en ce que** les deux optiques (6a, 6b) bien qu'étant conçues de façon identique sont disposées en étant tournées à 90° l'une par rapport à l'autre.
